Europäisches Patentamt

European Patent Office

Office européen des brevets

(19)

(11) Veröffentlichungsnummer : **0 030 667**
**B1**

(12)                    **EUROPÄISCHE PATENTSCHRIFT**

(45) Veröffentlichungstag der Patentschrift :
01.06.83

(51) Int. Cl.³ : **B 66 B   7/04**

(21) Anmeldenummer : **80107477.4**

(22) Anmeldetag : **29.11.80**

(54) **Rollenführungsschuh für Aufzüge.**

(30) Priorität : **11.12.79 CH 10964/79**

(43) Veröffentlichungstag der Anmeldung :
**24.06.81 Patentblatt 81/25**

(45) Bekanntmachung des Hinweises auf die Patenterteilung : **01.06.83 Patentblatt 83/22**

(84) Benannte Vertragsstaaten :
**AT BE DE FR IT NL SE**

(56) Entgegenhaltungen :
**US A 2 083 502**
**US A 2 251 963**

(73) Patentinhaber : **INVENTIO AG**
**Seestrasse 55**
**CH-6052 Hergiswil NW (CH)**

(72) Erfinder : **Schröder, Joris, Dr. Ing.**
**Schädrütihalde 2**
**CH-6006 Luzern (CH)**

EP 0 030 667 B1

Rollenführungsschuh für Aufzüge

Die Erfindung betrifft einen bekannten Rollenführungsschuh für Aufzüge, welcher mehrere, sich auf mindestens einer Führungsfläche einer Führungsschiene abstützende, in Bewegungsrichtung hintereinander angeordnete Laufrollen mit elastischen Laufflächen aufweist, die an mindestens einem in Richtung der Führungsschiene schwenkbar mit einem beweglichen Aufzugteil verbundenen Tragkörper drehbar gelagert sind.

Für die Führung von beweglichen Aufzugteilen, wie z. B. Aufzugskabinen und Gegengewichte, entlang von Führungsschienen, gelangen bekanntlich sogenannte Gleit- oder Rollenführungsschuhe zum Einsatz. Rollenführungsschuhe sind besonders vorteilhaft, weil die Reibung der Rollen in Ruhe nur wenig höher ist als die Rollreibung und daher die beim Übergang des beweglichen Aufzugsteils vom Stillstand zur Bewegung immer auftretenden Anfahrrucke auf ein Minimum reduziert werden.

Bei einem bekannten Rollenführungsschuh gemäss der DE-A-2 443 960 sind drei Rollenpaare gleicher Konstruktion vorgesehen, die je auf einer von drei Führungsschienenseiten aufliegen und je an einem mit dem beweglichen Aufzugsteil verbundenen Tragelement schwenkbar gelagert sind. Durch diese Anordnung soll der Rollenführungsschuh in die Lage versetzt werden, Unebenheiten, Diskontinuitäten und Schienenstossspalten in den Führungsschienen weitgehend nachzugeben und damit Stösse und Seitenbewegungen des beweglichen Aufzugsteils zu reduzieren.

Ein wesentlicher Nachteil der Rollenführungsschuhe besteht nun aber darin, dass die Rollen, welche eine in gewissen Grenzen elastische Lauffläche aufweisen, bei längerem Stillstand des beweglichen Aufzugsteils, an den Berührungsstellen mit der Führungsschiene an ihrem Umfang mehr oder weniger ausgeprägte, bei der Weiterfahrt über längere Zeit zurückbleibende Abplattungen erhalten. Diese Abplattungen bewirken einen unruhigen, holperigen Lauf des beweglichen Aufzugsteils. Besonders nachteilig wirkt sich dieser Effekt bei sogenannten Reffrahmenaufzügen aus, bei welchen die Kabine aussermittig aufgehängt ist und sich längs auf einer einzigen Seite angeordneten Führungsschienen bewegt. Bei dieser Anordnung werden nicht nur bei beladener, sondern auch bei leerer Kabine relativ grosse Kräfte über die Rollenführungsschuhe auf die Führungsschienen übertragen.

Der vorliegenden Erfindung liegt die Aufgabe zugrunde, einen Rollenführungsschuh vorzuschlagen, bei welchem der durch entstandene Abplattungen am Umfang der Laufrollen bewirkte unruhige Lauf des beweglichen Aufzugsteils auf ein Minimum reduziert wird.

Diese Aufgabe wird durch den im Anspruch 1 beanspruchten Rollenführungsschuh gelöst.

Eine vorteilhafte Ausführungsform des Rollenführungsschuhs ergibt sich aus dem Anspruch 2.

Auf beiliegender Zeichnung sind zwei Ausführungsbeispiele der Erfindung dargestellt, welche im folgenden näher erläutert werden. Es zeigen :

Figur 1 eine schematische Seitenansicht und

Figur 2 eine schematische Frontansicht der Führung und Abstützung der Kabine eines Reffrahmenaufzuges mit zwei auf einer einzigen Seite angeordneten Führungsschienen,

Figur 3 eine schematische Abbildung eines erfindungsgemässen Rollenführungsschuhs für bewegliche Aufzugteile in einer ersten Ausführungsform,

Figur 4 den Rollenführungsschuh der Figur 3 in einer anderen Stellung des beweglichen Aufzugsteils,

Figur 5 eine vereinfachte Seitenansicht eines erfindungsgemässen Rollenführungsschuhs in einer zweiten Ausführungsform und

Figur 6 einen Querschnitt gemäss der Linie A-A des Rollenführungsschuhs der Figur 5.

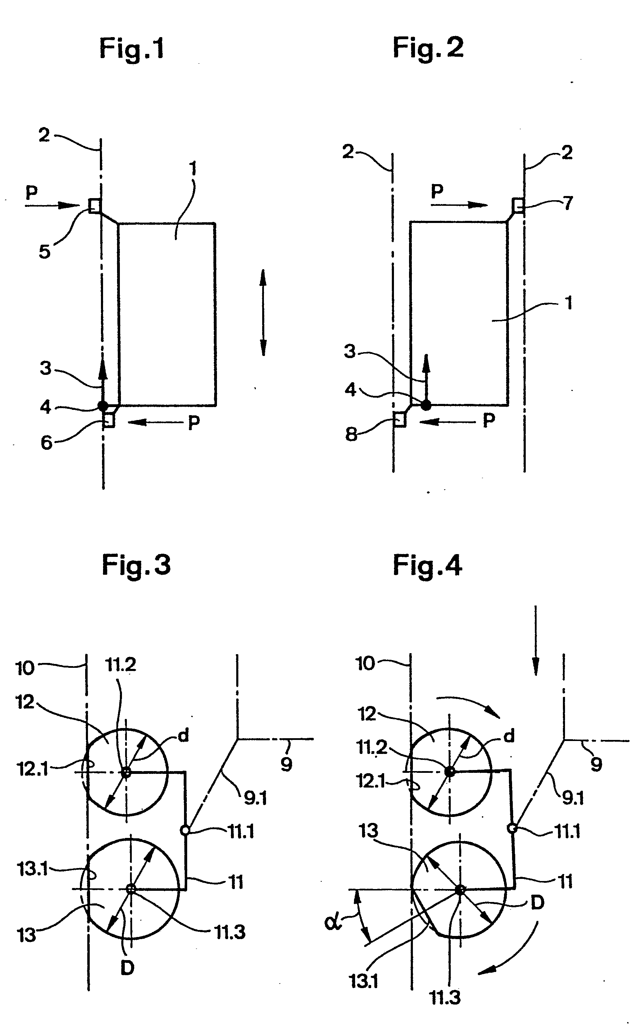

In den Figuren 1 und 2 ist mit 1 die Kabine eines Reffrahmenaufzuges bezeichnet, welche mittels zwei paralleler, hinter der Kabine 1 im Innern eines nicht dargestellten Aufzugsschachtes befestigter Führungsschienen 2 geführt ist. 3 bezeichnet ein von einem ebenfalls nicht dargestellten Aufzugsantrieb bewegbares Förderseil, an welchem die Kabine 1 aufgehängt ist. Mit 4 ist der Befestigungspunkt des Förderseils 3 am unteren Teil des Rahmens der Kabine 1 bezeichnet. 5 und 6 bezeichnen je zwei Führungsschuhe, 7 und 8 je einen Führungsschuh, welche zur Führung und Abstützung der Kabine 1 an den beiden Führungsschienen 2 dienen. Die bei dieser Anordnung von Führungsschienen 2, Führungsschuhen 5, 6, 7, 8 und Förderseil-Befestigungspunkt 4 auftretenden Kräfte sind mittels der Pfeile P angedeutet. Diese Kräfte sind schon bei leerer Kabine 1 relativ gross und nehmen noch zu, wenn die Kabine 1 beladen wird. Im Falle der Verwendung von Rollenführungsschuhen muss damit gerechnet werden, dass die Laufrollen vor allem bei längerem Stillstand des Aufzuges an ihrem Umfang Abplattungen erhalten.

Der in den Figuren 3 und 4 schematisch dargestellte erfindungsgemässe Rollenführungsschuh dient zur Führung und Abstützung eines beweglichen Aufzugsteils 9 an einer Führungsschiene 10. Er besteht im wesentlichen aus einem Tragkörper 11, an dessen beiden Enden auf Achsen 11.2, 11.3 je eine Laufrolle 12, 13 drehbar gelagert sind. Die beiden Laufrollen 12, 13 des Tragkörpers 11 besitzen unter sich verschiedene Durchmesser d bzw. D. Der Tragkörper 11 ist in seiner Mitte 11.1 in Richtung der Führungsschiene 10 schwenkbar an einem Arm 9.1 gelagert, welcher am beweglichen Aufzugsteil 9 befestigt ist.

Wenn die durch das bewegliche Aufzugsteil 9 gebildete Last eine relativ grosse Druckkraft mittels der Laufrollen 12, 13 auf die Führungsschiene 10 ausübt, wie dies z. B. bei der Kabine 1 der in den Figuren 1 und 2 gezeigten Aufzugseinrichtung der Fall ist, erleiden die beiden Laufrollen 12, 13 eine Abplattung 12.1, 13.1 an dem die Führungsschiene 10 berührenden Teil ihres Umfanges. Wenn das bewegliche Aufzugsteil 9 langzeitig im Ruhestand bleibt, wird die Druckkraft dauernd vom gleichen Teil 12.1, 13.1 (Fig. 3) des Umfanges der Laufrollen 12, 13 aufgenommen. Daraus ergibt sich eine, auch beim Weiterfahren des beweglichen Aufzugsteils 9 über längere Zeit zurückbleibende Abplattung, d. h. eine plastische Verformung des Materials der Laufrollen 12, 13. Beim Weiterfahren des beweglichen Aufzugsteils 9 wird daher bei jeder Umdrehung einer Führungsrolle 12, 13 ein Holpern während der Zeit bis der Normalzustand des Umfanges der betreffenden Führungsrolle mindestens teilweise wiederhergestellt ist entstehen. Aufgrund der verschiedenen Durchmesser der Laufrollen 12, 13 trifft der verformte Teil 12.1 des Umfanges der kleinen Laufrolle 12 im Verlauf der Bewegung des beweglichen Aufzugsteils 9 jeweils vor dem verformten Teil 13.1 der grösseren Laufrolle 13 auf der Führungsschiene 10 ein, d. h. dass sich während einer vollen Drehung der kleineren Laufrolle 12 die grössere Laufrolle 13 nur um einen Drehwinkel von 360°-α dreht, wobei der Winkel α vom Durchmesserunterschied der Laufrollen 12, 13 abhängt.

Vom Moment der Wiederingangsetzung des beweglichen Aufzugsteils 9 an, berührt daher, während einer insbesondere bei kleinen Durchmesserdifferenzen relativ grossen Anzahl Umdrehungen, immer ein nicht verformter Teil wenigstens einer Laufrolle 12 oder 13 die Führungsschiene 10. Da der Tragkörper 11 in seiner Mitte 11.1 schwenkbar mit dem beweglichen Aufzugsteil 9 verbunden ist, liegen beide Laufrollen 12, 13 dauernd auf der Führungsschiene 10 auf. Bei jedem Eintreffen eines verformten Teils 12.1 oder 13.1 auf der Führungsschiene 10 führt der Tragkörper 11 eine Schwenkbewegung um seinen Drehpunkt aus. Dadurch wird der mittels des beweglichen Aufzugsteils 9 wahrnehmbare Holpereffekt jedes Mal auf die Hälfte reduziert.

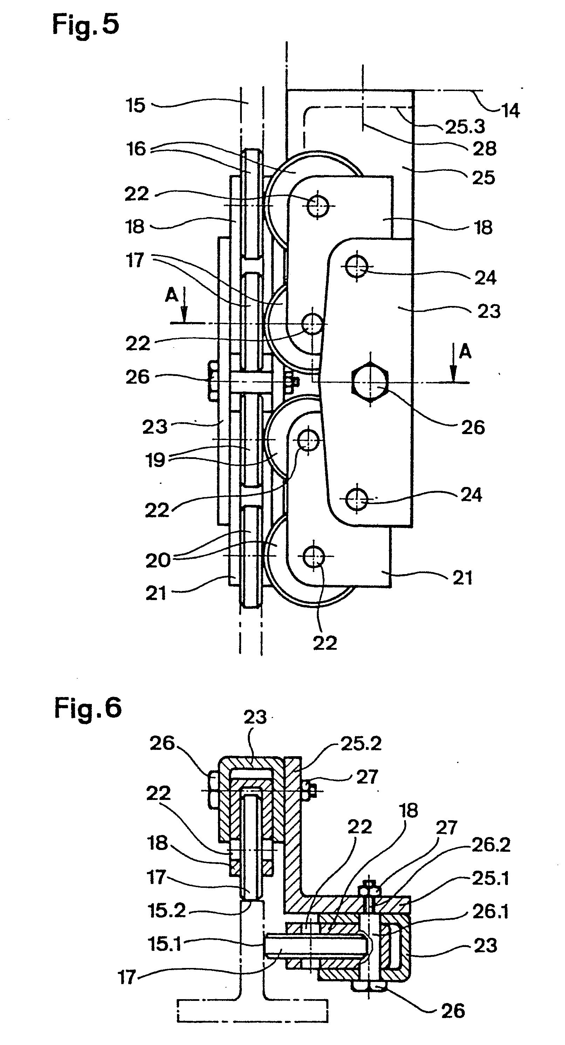

In der in den Figuren 5 und 6 gezeigten bevorzugten Ausführungsform eines erfindungsgemässen Rollenführungsschuhs erfolgt die Führung eines beweglichen Aufzugsteils 14 längs zwei unter sich rechtwinklig angeordneter Führungsflächen 15.1, 15.2 einer Führungsschiene 15. Der Rollenführungsschuh besitzt für jede Führungsfläche 15.1, 15.2 einen Satz von vier hintereinander angeordneten und unter sich geringe Durchmesserdifferenzen aufweisende Laufrollen 16, 17, 19, 20. Die beiden Laufrollensätze sind identisch. In jedem Satz sind die vier Laufrollen 16, 17, 19, 20 paarweise angeordnet. Jedes Paar Laufrollen 16, 17 bzw. 19, 20 ist in einem U-förmigen Tragkörper 18 bzw. 21 zwischen dessen Schenkeln mittels Achsen 22 drehbar gelagert. Für jeden Laufrollensatz sind die beiden Tragkörper 18, 21 zwischen den Schenkeln eines ebenfalls U-förmigen Jochs 23 an dessen Enden mittels Achsen 24 schwenkbar gelagert. Jedes Joch 23 ist durch den einen von zwei Armen 25.1 bzw. 25.2 eines winkelförmigen Verbindungselementes 25 schwenkbar getragen. Zu diesem Zweck ist, in gleichem Abstand von den beiden Schwenkachsen 24 der Tragkörper 18, 21, in beiden Schenkeln jedes U-förmigen Jochs 23 eine Bohrung vorgesehen. In der Bohrung ist der zylindrische Körper 26.1 einer Passschraube 26 angeordnet, deren Gewindeteil 26.2 in einer im betreffenden Arm 25.1 bzw. 25.2 des winkelförmigen Verbindungselementes 25 vorgesehenen Bohrung geführt und mittels einer Mutter 27 am Verbindungselement 25 befestigt ist. Das Verbindungselement 25 weist an dem einen seiner Enden eine Auflageplatte 25.3 auf, mittels welcher der Rollenführungsschuh am beweglichen Aufzugsteil 14 durch Schrauben 28 befestigt ist.

Dank dieser Ausführungsform wird der am beweglichen Aufzugsteil 14 bei der Umdrehung der abgeplatteten Laufrollen 16, 17, 19, 20 auftretende Holpereffekt auf ein Viertel reduziert. Ein derartiger Rollenführungsschuh erweist sich daher bei der Führung von Aufzugskabinen, insbesondere von Kabinen von Reffrahmenaufzügen, als vorteilhaft.

Der oder die Tragkörper 18, 21, sowie gegebenenfalls das oder die Joche 23, könnten anstatt U-förmig aus schwenkbaren flachen Tragelementen gebildet sein, an welchen die Laufrollen bzw. Tragkörper seitlich gelagert sind. Desgleichen könnten der oder die Tragkörper 18, 21, oder gegebenenfalls das oder die Joche 23, mit dem beweglichen Aufzugsteil direkt oder mittels anderer als der dargestellten Mittel verbunden sein. Andererseits könnte, um die gleichzeitige Führung des beweglichen Aufzugsteils längs mehrerer Führungsflächen der Führungsschiene zu erlauben, der Rollenführungsschuh auch mit einem zusätzlichen erfindungsgemässen Laufrollensatz ausgerüstet sein.

## Ansprüche

1. Rollenführungsschuh für Aufzüge, welcher mehrere, sich auf mindestens einer Führungsfläche einer Führungsschiene (10, 15) abstützende, in Bewegungsrichtung hintereinander angeordnete Laufrollen (12, 13 ; 16, 17, 19, 20) mit elastischen Laufflächen aufweist, die an mindestens einem in Richtung der Führungsschiene schwenkbar mit einem beweglichen Aufzugteil (9, 14) verbundenen Tragkörper (11, 18, 21) drehbar gelagert sind, dadurch gekennzeichnet, dass die Laufrollen (12, 13 bzw. 16, 17, 19, 20) mindestens eines Tragkörpers (11, 18, 21) unter sich verschiedene Durchmesser (d, D) aufweisen.

2. Rollenführungsschuh nach Anspruch 1, dadurch gekennzeichnet, dass bei vier in Bewegungsrichtung des beweglichen Aufzugsteils (14) hintereinander paarweise angeordneten Laufrollen (16, 17, 19, 20) diese unter sich verschiedene Durchmesser aufweisen, wobei jedes Paar Laufrollen (16, 17 bzw. 19, 20) einem Tragkörper (18 bzw. 21) zugeordnet ist und die Tragkörper (18 bzw. 21) schwenkbar mit einem Joch (23) und dieses schwenkbar mit dem beweglichen Aufzugsteil (14) verbunden ist.

## Claims

1. Roller guide shoe for lifts, displaying several runners with elastic running surface, which are arranged behind one another in direction of motion, bear on at least one guide surface of a guide rail and are rotatably borne in at least one carrying element, which in direction of the guide rail, is pivotably connected with a movable lift part, characterised thereby, that the runners (12, 13 or 16, 17, 19, 20) of at least one carrying element (11, 18, 21) display different diameters (d, D) among themselves.

2. Roller guide shoe according to claim 1, characterised thereby, that in the case of four runners (16, 17, 19, 20) arranged in pairs behind one another in direction of motion of the movable lift part (14), these display different diameters among themselves, wherein a carrying body (18 or 21) is associated with each pair of runners (16, 17 or 19, 20) and the carrying bodies (18 or 21) are pivotably connected with a yoke (23) and this is pivotably connected with the movable lift part (14).

## Revendications

1. Ensemble de guidage à galets pour ascenseurs comportant plusieurs galets de roulement (12, 13 ; 16, 17, 19, 20) pourvus d'une surface de roulement élastique qui s'appuient sur au moins une face de guidage d'un rail de guidage (10, 15) et sont disposés l'un à la suite de l'autre dans la direction du mouvement, galets de roulement qui sont portés tournants par au moins un corps de support (11, 18, 21) qui, en direction du rail de guidage, est relié pivotant à une partie d'ascenseur mobile, caractérisé en ce que les galets de roulement (12, 13 ; 16, 17, 19, 20) d'au moins un corps de support (11, 18, 21) présentent entre eux des diamètres différents (d, D).

2. Ensemble de guidage à galets selon la revendication 1, caractérisé en ce que dans le cas de quatre galets de roulement (16, 17, 19, 20) disposés l'un à la suite de l'autre par paires dans la direction du mouvement de la partie d'ascenseur mobile (14), ces galets de roulement présentent entre eux des diamètres différents, un corps de support (18, 21) étant associé à chaque paire de galets de roulement (16, 17, 19, 20) et les corps de supports (18, 21) reliés pivotants à un élément d'accouplement (23) lui-même relié pivotant à la partie d'ascenseur mobile (14).

## Fig.1

## Fig.2

## Fig.3

## Fig.4

**Fig. 5**

**Fig. 6**